# FASCICULE DE BREVET EUROPEEN

(11) **EP 3 077 178 B1**
(45) Date de publication et mention de la délivrance du brevet: **04.11.2020**
(21) Numéro de dépôt: 14821756.5
(22) Date de dépôt: 28.11.2014
(51) Int. Cl.: B29C 65/48, B29C 65/26, F16B 11/00, F04D 29/02, F04D 29/32, B29C 65/18, B29C 65/24, B29L 31/08, F01D 5/14, F01D 5/28

(54) **PROCÉDÉ DE COLLAGE DE PIÈCES ET DISPOSITIF POUR LA MISE EN OEUVRE DE CE PROCÉDÉ**
VERFAHREN ZUR HAFTUNG VON TEILEN UND VORRICHTUNG ZUR IMPLEMENTIERUNG DES BESAGTEN VERFAHRENS
METHOD FOR ADHERING PARTS AND DEVICE FOR IMPLEMENTING SAID METHOD

(30) Priorité: 04.12.2013 FR 1362111
(43) Date de publication de la demande: 12.10.2016
(73) Titulaire: Safran Aircraft Engines, 75015 Paris (FR)
(72) Inventeur: GODON, Thierry, F-77550 Moissy-Cramayel Cedex (FR); SCHNEIDER, Julien, F-77550 Moissy-Cramayel Cedex (FR); VARIN, Franck, Bernard,Léon, F-77550 Moissy-Cramayel Cedex (FR)
(74) Mandataire: Cabinet Beau de Loménie
(86) Numéro de dépôt international: PCT/FR2014/053088
(87) Numéro de publication internationale: WO 2015/082813

(56) Documents cités:
- EP-A2- 1 767 335
- WO-A2-2007/035100

## Description

### Arrière-plan de l'invention

L'invention concerne des procédés de collage de pièces ainsi que des dispositifs pour la mise en œuvre de ces procédés.

Le collage d'un bord d'attaque métallique sur une aube de turbomachine en matériau composite peut être une opération technique relativement complexe. Un tel collage peut impliquer une opération de mise en place de la couche d'adhésif entre les deux substrats, une élévation en température ainsi qu'une mise sous pression pour conditionner correctement la couche d'adhésif. Il peut aussi être nécessaire de maintenir la température ainsi que la pression pendant un certain temps suffisant pour réaliser la polymérisation du matériau utilisé dans la couche d'adhésif.

Imposer une pression constante ainsi qu'une montée en température à une couche d'adhésif de forme tridimensionnelle complexe peut être relativement difficile à réaliser.

Une solution pour résoudre ce problème est de réaliser des moules spécifiques dans lesquels l'épaisseur de la couche d'adhésif n'est pas constante. Toutefois, les pièces obtenues par mise en œuvre de cette solution peuvent ne pas présenter des propriétés mécaniques satisfaisantes.

Les mêmes difficultés peuvent être rencontrées pour le collage d'autres types de pièces, comme par exemple :
- le collage d'un bord d'attaque ou de fuite métallique sur une aube directrice de sortie (« Outlet Guide Vane »),
- le collage d'aubes directrices de sortie creuses métalliques, ou
- le collage de secteurs métalliques de renfort sur les brides d'un carter axisymétrique en matériau composite.

On connait par ailleurs WO 2007/035100 qui décrit un procédé de collage d'un élément à une pièce en matériau composite. EP 1 767 335 décrit quant à lui un procédé permettant de faire adhérer deux pièces en matériau composite polymérique.

Il existe, par conséquent, un besoin pour obtenir de nouveaux procédés de collage de pièces permettant d'imposer une pression constante à la couche d'adhésif tout au long du cycle de fabrication.

Il existe aussi un besoin pour obtenir de nouveaux procédés de collage de pièces ayant un coût de mise en œuvre réduit.

Il existe aussi un besoin pour obtenir de nouveaux procédés de collage de pièces permettant de contrôler de manière satisfaisante l'épaisseur de la couche d'adhésif obtenue et, par exemple, d'obtenir une couche d'adhésif d'épaisseur la plus constante que possible.

Il existe aussi un besoin pour obtenir de nouveaux procédés de collage de pièces permettant d'imposer aux pièces à coller et à l'adhésif une température homogène et la plus constante que possible.

Il existe encore un besoin pour obtenir de nouveaux dispositifs spécialement adaptés à la mise en œuvre de ces procédés.

### Objet et résumé de l'invention

A cet effet, l'invention propose, selon un premier aspect, un procédé de collage d'au moins deux pièces comportant les étapes suivantes :
a) assemblage d'au moins deux pièces et d'au moins une couche d'adhésif, l'une au moins des pièces étant en matériau composite ou en matériau métallique, la couche d'adhésif étant présente, une fois l'assemblage effectué, entre les pièces, les pièces et l'adhésif assemblés étant présents dans une chambre délimitée par une paroi, la paroi ayant une face interne située en regard d'une première pièce présente entre la couche d'adhésif et la paroi, et
b) application d'un liquide sur la paroi du côté opposé à la chambre, le liquide appliqué imposant une pression sur les pièces, la paroi étant configurée pour que, au moins après application du liquide, sa face interne ait la même forme que la première pièce, un collage des pièces par l'intermédiaire de la couche d'adhésif étant obtenu après mise en œuvre des étapes a) et b).

L'application d'une pression par un liquide au travers de la paroi et le fait que la paroi ait ou prenne la forme d'au moins une des pièces à coller permet avantageusement de disposer d'un procédé de collage dans lequel une pression constante est appliquée à l'adhésif et ce quelle que soit la forme des pièces à coller.

En outre, la présente invention permet avantageusement de disposer d'un procédé de collage de coût de mise en œuvre significativement inférieur à celui des procédés de collage connus.

Ainsi, dans l'invention, la face interne de la paroi a, au moins après application du liquide, la même forme que la face de la première pièce située en regard de la paroi.

La face interne de la paroi peut, dans un exemple de réalisation, être aussi située en regard d'une deuxième pièce sur laquelle la première pièce est destinée à être collée. Dans ce cas, on ne sort pas du cadre de la présente invention lorsque la face interne de la paroi a, au moins après application du liquide, la même forme que la face de la première pièce située en regard de la paroi et que d'une partie d'une face d'une deuxième pièce sur laquelle la première pièce est destinée à être collée.

Dans un exemple de réalisation, les pièces peuvent être entièrement présentes dans la chambre. En variante, au moins une des pièces n'est qu'en partie présente dans la chambre.

Dans un exemple de réalisation, l'assemblage des pièces et de l'adhésif peut d'abord être réalisé puis la paroi peut être positionnée de manière à délimiter la chambre dans laquelle les pièces et l'adhésif assemblés sont présents. En variante, la paroi peut d'abord être positionnée de manière à délimiter la chambre puis l'assemblage des pièces et de l'adhésif peut être réalisé.

Dans un exemple de réalisation, le liquide peut être introduit, lors de l'étape b), dans une cavité, la paroi étant située entre la chambre et la cavité. Dans ce cas, la cavité dans laquelle le liquide est introduit peut être délimitée par une ou plusieurs parois de la cavité rigides, c'est-à-dire qui ne se déforment pas lors de l'application du liquide.

Dans un exemple de réalisation, les pièces peuvent être présentes sur un support avant l'étape b). Le support peut délimiter la cavité dans laquelle le liquide est introduit durant l'étape b). Le support peut être rigide.

Par « support rigide », il faut comprendre que le support présente une rigidité suffisante pour ne pas se déformer suite à l'application du liquide sur la paroi.

Dans un exemple de réalisation, la chambre peut être définie entre la paroi et le support délimitant la cavité dans laquelle le liquide peut être introduit lors de l'étape b), les pièces étant présentes avant l'étape b) sur le support.

Dans un exemple de réalisation, la face interne de la paroi peut conserver sa forme lors de l'application du liquide. Dans ce cas, la face interne de la paroi présente, avant l'application du liquide, la même forme que la première pièce. Toujours dans ce cas, la face interne de la paroi conserve sa forme durant le procédé de collage selon l'invention et, en particulier, lors de son appui sur les pièces à coller suite à l'application du liquide.

Dans un exemple de réalisation, la paroi peut être comprimée du fait de l'application du liquide alors que sa face interne conserve sa forme. La compression de la paroi peut avantageusement être élastique. La compression de la paroi peut, par exemple, résulter en une diminution de l'épaisseur de la paroi inférieure ou égale à 0,1 %.

L'épaisseur de la paroi est, sauf mention contraire, définie comme la plus petite dimension transversale de la paroi.

Dans un autre exemple de réalisation, la paroi est telle qu'elle n'est pas comprimée suite à l'application du liquide. Ainsi, dans un exemple de réalisation, la paroi peut ne subir aucune déformation suite à l'application du liquide.

Lorsque la paroi est telle que sa face interne conserve sa forme, la paroi peut, de préférence, présenter un module d'Young compris entre 1 GPa et 250 GPa, de préférence entre 50 GPa et 200 GPa.

Lorsque la paroi est telle que sa face interne conserve sa forme, la paroi peut comporter, notamment être constituée de, un matériau choisi parmi : les composés métalliques, par exemple l'acier, les métaux, par exemple l'aluminium, le titane, les verres, les matériaux composites à résine thermodurcissable ou résine thermoplastique ou résine céramique (i.e. résine chargée d'une poudre céramique), les résines organiques renforcées ou non, thermodurcissables ou thermoplastiques, les céramiques, par exemple l'oxyde d'alumine, les matériaux solides sous la forme de mousses et leurs mélanges.

En variante, la forme de la face interne de la paroi peut être modifiée lors de l'application du liquide. Dans ce cas, la face interne de la paroi prend, après l'application du liquide, la forme de la première pièce. Une fois en appui sur les pièces à coller suite à l'application du liquide, la face interne de la paroi peut conserver sa forme.

Lorsque la paroi est telle que la forme de sa face interne est modifiée lors de l'application du liquide, la paroi peut comporter, notamment être constituée de, un matériau choisi parmi : les silicones renforcés ou non, les polymères thermoplastiques, par exemple le polyamide, le polytéréphtalate d'éthylène (PET), le téflon® (PTFE) ou le polyimide, et leurs mélanges (cette liste n'étant pas exhaustive).

Dans un exemple de réalisation, la paroi peut, avant l'étape b), déjà appliquer une pression sur les pièces. La paroi peut, par exemple, avant l'étape b) être en contact avec l'une au moins des pièces. En variante, aucune des pièces ne subit de pression appliquée par la paroi avant l'étape b). Ainsi, dans un exemple de réalisation, il est possible qu'aucune des pièces ne soit en contact avec la paroi avant l'étape b).

Tout ou partie de la paroi peut se déplacer suite à l'application du liquide.

La paroi peut avantageusement être imperméable au liquide appliqué. Ainsi, le liquide appliqué sur la paroi peut, de préférence, ne pas pénétrer dans la chambre.

Dans un exemple de réalisation, la pression imposée par le liquide sur les pièces peut être supérieure à 4 bars, par exemple être supérieure ou égale à 5 bars, par exemple être supérieure ou égale à 6 bars, par exemple être supérieure ou égale à 7 bars, par exemple être supérieure ou égale à 8 bars.

Dans un exemple de réalisation, le procédé peut, après l'étape b), comporter une étape c) de chauffage de la couche d'adhésif.

L'étape c) permet avantageusement d'augmenter le pouvoir adhésif de l'adhésif par polymérisation de celui-ci et d'augmenter ainsi la cohésion entre les pièces. Dans le cas où l'étape c) est réalisée, il est possible d'obtenir le collage après mise en œuvre des étapes a), b) et c). On peut, par exemple, utiliser un adhésif activable à chaud. L'adhésif utilisé peut être thermodurcissable. Toutefois, l'invention n'est pas limitée à l'utilisation d'adhésifs dont le pouvoir adhésif augmente par chauffage.

Avantageusement, l'étape c) peut être réalisée alors que les pièces sont soumises à la pression appliquée par le liquide.

Durant l'étape c), la température de la couche d'adhésif peut augmenter d'au moins 20°C, par exemple d'au moins 160 °C, par exemple d'au moins 300 °C. Par exemple, la température de la couche d'adhésif peut augmenter d'au moins 300°C pour un adhésif de type bismaléimide et d'au moins 20°C, voire d'au moins 160°C, pour un adhésif de type époxyde. Dans un exemple de réalisation, pour un adhésif de type époxyde, la température de la couche d'adhésif peut, durant l'étape c), être portée à 150°C. Dans un exemple de réalisation, pour un adhésif de type bismaléimide, la température de la couche d'adhésif peut, durant l'étape c), être portée à 250°C.

Durant l'étape c), la température du liquide appliqué peut augmenter d'au moins 180 °C, par exemple d'au moins 350 °C.

Avantageusement, tout ou partie du liquide appliqué peut ne pas changer d'état durant l'étape c).

Dans un exemple de réalisation, l'étape c) peut être réalisée alors que les pièces sont présentes dans l'enceinte d'un dispositif de chauffage, par exemple dans l'enceinte d'une étuve ou d'un autoclave.

Toutefois, il peut être avantageux que l'étape c) ne soit pas mise en œuvre au sein d'un autoclave. Cela permet avantageusement de conserver un coût de mise en œuvre réduit pour le procédé selon l'invention.

Dans un exemple de réalisation, le liquide peut être chauffé avant son application sur la paroi, le chauffage de la couche d'adhésif étant alors réalisé après l'étape b) du fait de la mise à proximité du liquide chauffé avec la couche d'adhésif. En variante, un organe de chauffage réalisant le chauffage durant tout ou partie de l'étape c) peut être présent dans la cavité dans laquelle le liquide est introduit lors de l'étape b) et/ou dans le support délimitant la cavité et/ou dans la paroi et/ou sur la paroi et/ou dans la chambre.

De telles caractéristiques permettent avantageusement de réaliser un chauffage homogène et local et d'éviter de porter les pièces à coller à des températures pouvant les endommager.

En outre, un tel chauffage local permet avantageusement de diminuer la durée et le coût du procédé selon l'invention.

De préférence, l'organe de chauffage réalisant le chauffage durant tout ou partie de l'étape c) peut être présent dans la cavité dans laquelle le liquide est introduit lors de l'étape b).

L'organe de chauffage peut, par exemple, comporter une ou plusieurs résistances chauffantes.

L'adhésif peut, par exemple, être choisi parmi des adhésifs de type époxyde, bismaléimide, uréthane ou acrylique.

L'épaisseur de la couche d'adhésif présente entre les pièces à coller peut avant l'étape b) être supérieure ou égale à 0,1 mm et/ou être inférieure à 5 mm. L'épaisseur de la couche d'adhésif présente entre les pièces à coller peut, par exemple, avant l'étape b) être comprise entre 0,5 mm et 1 mm.

Sauf mention contraire, l'épaisseur de la couche d'adhésif correspond à la plus petite dimension transversale de la couche d'adhésif.

Les matériaux utilisés pour constituer la paroi sont bien entendus aptes à une utilisation dans le cadre du procédé selon l'invention, notamment compatibles en température avec la mise en œuvre du procédé selon l'invention.

Dans un exemple de réalisation, la paroi peut être constituée d'un seul matériau. En variante, la paroi peut comporter une pluralité de matériaux différents.

La paroi peut être monocouche ou en variante être multicouche. La(les) couche(s) constituant la paroi peuvent être sous la forme d'un film. Dans un exemple de réalisation, la paroi est sous la forme d'un feuillard métallique, comportant par exemple du titane, le feuillard peut par exemple présenter une épaisseur de plusieurs dixièmes de mm.

L'épaisseur de la paroi avant mise en œuvre de l'étape b) peut, par exemple, être comprise entre 0,5 mm et 50 mm.

Le liquide appliqué peut, par exemple, être choisi parmi : l'eau, les huiles, par exemple les huiles organiques ou les huiles de silicone, et leurs mélanges.

Dans un exemple de réalisation, une pluralité de couches d'adhésif peut être présente sur au moins une des pièces, les couches d'adhésif pouvant ne pas être en contact les unes avec les autres et chaque couche d'adhésif pouvant être présente entre deux pièces à coller.

Dans un exemple de réalisation, chaque couche d'adhésif peut permettre de coller une pièce distincte. Deux pièces collées par deux couches d'adhésif différentes peuvent être identiques ou différentes.

Dans un exemple de réalisation, la pluralité de couches d'adhésif peut comporter un adhésif identique. En variante, la pluralité de couches d'adhésif peut comporter des adhésifs différents, chacune des couches d'adhésif comportant, par exemple, un adhésif différent. Lorsqu'une pluralité d'adhésifs différents sont utilisés, ces derniers présentent des cycles de fabrication en pression et en température compatibles.

Dans un exemple de réalisation, au moins deux pièces peuvent être collées sur une même pièce, une pression sur chacune desdites au moins deux pièces étant appliquée par un liquide au travers d'une paroi distincte.

Dans un exemple de réalisation, la paroi peut se déplacer durant l'étape b) et le déplacement de tout ou partie de la paroi peut être contrôlé, durant l'étape b), par un organe de limitation du déplacement de la paroi.

Une telle caractéristique permet avantageusement de contrôler l'épaisseur de la couche d'adhésif obtenue entre les pièces à coller.

Dans un exemple de réalisation, la paroi peut être sous la forme d'une membrane configurée pour se déformer suite à l'application du liquide, à laquelle sont fixés, par exemple collés, un ou plusieurs éléments rigidifiants.

Les éléments rigidifiants peuvent être présents d'un seul côté de la membrane ou, en variante, des deux côtés de la membrane. Les éléments rigidifiants peuvent être présents du côté de la chambre et/ou du côté opposé à la chambre.

Les éléments rigidifiants peuvent par exemple se présenter sous la forme d'un ensemble de fibres de renfort, les fibres de renfort étant, par exemple, en verre. L'élément rigidifiant peut être rapporté. Par exemple, l'élément rigidifiant peut être sous la forme d'un élément métallique collé ou noyé dans du silicone.

Le(s) élément(s) rigidifiant(s) peut (peuvent), par exemple, permettre de former un poinçon sur l'une au moins des pièces à coller.

Dans un exemple de réalisation, une membrane imperméable peut recouvrir la paroi et la paroi peut être située entre la chambre et la membrane imperméable et le liquide peut être appliqué sur la membrane imperméable du côté opposé à la chambre.

La membrane imperméable peut ou non recouvrir la totalité de la paroi. Dans un exemple de réalisation, la membrane imperméable peut déjà être au contact de la paroi avant même l'application du liquide. En variante, la membrane imperméable est mise au contact de la paroi suite à l'application du liquide. En variante encore, une couche intermédiaire peut être présente entre la paroi et la membrane imperméable empêchant un contact entre paroi et membrane imperméable.

Dans un exemple de réalisation, la membrane imperméable peut comporter, notamment être constituée de, un matériau choisi parmi : les silicones renforcés ou non, les polymères thermoplastiques, par exemple le polyamide, le polytéréphtalate d'éthylène (PET), le téflon® (PTFE) ou le polyimide (cette liste n'étant pas exhaustive).

Dans un exemple de réalisation, les pièces peuvent être en matériau composite et peuvent comporter un renfort fibreux ainsi qu'une matrice.

En variante, les pièces peuvent être en matériau métallique.

En variante encore, la première pièce peut être en matériau métallique et une deuxième pièce sur laquelle la première pièce est destinée à être collée peut être en matériau composite et peut comporter un renfort fibreux ainsi qu'une matrice.

Le matériau métallique peut, par exemple, être choisi parmi : l'acier, le titane, l'aluminium ou le SiC-titane.

Dans un exemple de réalisation, la première pièce peut être un élément destiné à constituer une fois collé un bord d'attaque ou un bord de fuite et une deuxième pièce sur laquelle la première pièce est destinée à être collée peut être une aube de turbomachine.

Dans un exemple de réalisation, la première pièce est un élément de renfort en matériau métallique, par exemple un secteur métallique de renfort, et la deuxième pièce est une bride de carter en matériau composite comportant un renfort fibreux ainsi qu'une matrice.

Dans un exemple de réalisation, la première pièce peut constituer une fois collée un joint d'étanchéité, par exemple en silicone, et la deuxième pièce peut être une pièce en matériau composite ou en matériau métallique.

Dans un exemple de réalisation, au moins une des pièces à coller peut être une pièce creuse. Le collage peut, dans ce cas, être réalisé sur la partie interne et/ou la partie externe de la pièce creuse. La pièce creuse peut ou non être axisymétrique.

Les pièces en matériau composite mises en œuvre dans le cadre de la présente invention peuvent comporter un renfort fibreux de toute sorte. Le renfort fibreux peut, par exemple, être un renfort fibreux tissé, par exemple un renfort fibreux tissé 3D. Le renfort fibreux peut, par exemple, comporter des fibres en céramique, par exemple en carbure de silicium (SiC), d'oxyde d'alumine et/ou des fibres en carbone, verre ou aramide, ou bien encore des fibres d'un matériau thermoplastique.

La matrice des matériaux composites mentionnés plus haut peut être en céramique, en carbone, en matériau métallique ou organique. La matrice peut, par exemple, être une matrice époxyde.

La présente invention vise également un dispositif pour la mise en oeuvre d'un procédé tel que défini plus haut, le dispositif comportant :
- une paroi délimitant une chambre, la chambre définissant un volume interne dans lequel au moins deux pièces sont destinées à être collées par l'intermédiaire d'au moins une couche d'adhésif, et
- un dispositif d'injection de liquide configuré pour appliquer un liquide sur la paroi,

le dispositif étant configuré pour que l'application du liquide sur la paroi ne modifie pas la forme de la face interne de la paroi située du côté de la chambre et génère une pression suffisante sur la paroi pour déplacer celle-ci et réduire le volume interne de la chambre.

Dans un exemple de réalisation, le dispositif peut comporter un support délimitant une cavité dans laquelle le liquide est destiné à être introduit. Dans un exemple de réalisation, la chambre peut être définie entre la paroi et le support délimitant la cavité dans laquelle le liquide est destiné à être introduit.

Dans un exemple de réalisation, le dispositif peut, en outre, comporter un organe de chauffage, l'organe de chauffage pouvant être présent dans la cavité dans laquelle le liquide est destiné à être introduit et/ou dans le support délimitant la cavité et/ou dans la paroi et/ou sur la paroi et/ou dans la chambre.

De préférence, l'organe de chauffage peut être présent dans la cavité dans laquelle le liquide est destiné à être introduit.

Dans un exemple de réalisation, le dispositif peut être axisymétrique. Dans un exemple de réalisation, le dispositif peut comporter au moins deux parois, chacune des parois étant destinée à appliquer une pression sur une pièce distincte à coller.

Dans un exemple de réalisation, le dispositif peut comporter un organe de limitation du déplacement de la paroi permettant de contrôler le déplacement de tout ou partie de la paroi lors de l'application du liquide.

La paroi peut présenter les caractéristiques décrites plus haut applicables à la paroi dont la forme de la face interne n'est pas modifiée lors de l'application du liquide.

Dans un exemple de réalisation, le dispositif peut comporter une membrane imperméable recouvrant la paroi, la membrane imperméable pouvant être telle que décrite plus haut.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 représente, de manière schématique et partielle, un exemple de procédé de collage selon l'invention,
- les figures 2, 3, 4, 5A, 5B et 6 représentent, de manière schématique et partielle, des variantes de réalisation d'un procédé de collage selon l'invention, et
- la figure 2A représente, de manière schématique et partielle, un détail de la figure 2.

### Description détaillée de modes de réalisation

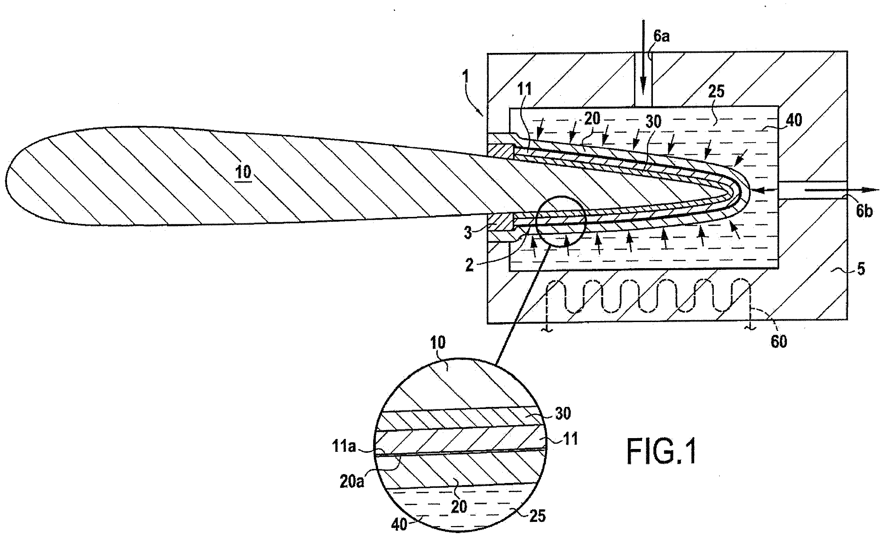

On a représenté à la figure 1 un exemple de réalisation d'un procédé de collage de pièces selon l'invention. Cet exemple met en œuvre un dispositif 1 comportant une chambre 2 dans laquelle deux pièces à coller 10 et 11 sont présentes. Une première pièce 11 est située en regard de la face interne 20a de la paroi 20 délimitant la chambre 2. Une couche d'adhésif 30 est présente entre les pièces 10 et 11 et est en contact avec ces dernières. La première pièce 11 est présente entre la couche d'adhésif 30 et la paroi 20. La face interne 20a de la paroi 20 est située du côté de la chambre 2. La chambre 2 est, en outre, délimitée par un joint d'étanchéité 3.

Comme représenté, seule une partie de la deuxième pièce 10 sur laquelle la première pièce 11 est destinée à être collée est présente dans la chambre 2. Dans l'exemple illustré, la deuxième pièce 10 est une aube de turbomachine et la première pièce 11 est un élément destiné à constituer une fois collé un bord d'attaque. L'aube de turbomachine 10 peut, par exemple, être en matériau composite et comporter un renfort fibreux en carbone et densifié par une matrice époxyde. L'élément 11 destiné à constituer un bord d'attaque peut être en matériau métallique.

On ne sort pas du cadre de la présente invention lorsque les pièces à coller sont, par exemple, chacune en matériau composite et comportent chacune un renfort fibreux en carbone et densifié par une matrice époxyde. Les pièces à coller peuvent encore comporter un ou plusieurs matériaux sandwich de type nid d'abeilles ou mousse. On peut encore réaliser dans le cadre des procédés selon l'invention un collage entre une pluralité de pièces, chacune étant en matériau métallique ou bien encore, par exemple, en verre, en bois ou en céramique.

La paroi 20 est située entre la chambre 2 et une cavité 25 délimitée par un support 5 sur lequel les pièces 10 et 11 sont présentes. Un liquide 40 a, comme illustré, été introduit dans la cavité 25 par l'intermédiaire d'un orifice d'entrée 6a du liquide. Un orifice de sortie du liquide 6b peut, par ailleurs, être présent afin d'évacuer le liquide 40 une fois le procédé de collage terminé. Les orifices d'entrée 6a et de sortie 6b du liquide peuvent, comme représenté, être ménagés dans le support 5. Le dispositif 1 comporte, en outre, un dispositif d'injection de liquide (non représenté) permettant d'introduire le liquide 40 dans la cavité 25. Dans l'exemple illustré, le support 5 forme une paroi de la cavité 25 rigide délimitant ladite cavité 25. Dans l'exemple illustré, le support 5 ne se déforme pas lors de l'application du liquide sur la paroi 20. Une fois le liquide appliqué, celui-ci reste immobile afin d'appliquer une pression hydrostatique sur les pièces à coller 10 et 11.

Dans l'exemple de réalisation représenté à la figure 1, la forme de la face interne 20a de la paroi 20 a été modifiée, après introduction du liquide 40 dans la cavité 25, de manière à prendre la même forme que la pièce 11. La face interne 20a de la paroi 20 a pris, après application du liquide 40, la même forme que la face 11a de la pièce 11 située en regard de la paroi 20. Dans ce cas, la paroi 20 peut être une paroi souple en silicone. La forme de la paroi 20 peut se rapprocher au mieux de la géométrie du bord d'attaque à coller 11 avant application du liquide et prendre ensuite la forme du bord d'attaque 11 une fois le liquide appliqué.

Le liquide 40 applique une pression sur les pièces 10 et 11 au travers de la paroi 20. Le liquide 40 impose une pression hydrostatique aux pièces 10 et 11 et à la couche d'adhésif 30 assemblés. Le liquide 40 applique une pression sur l'intégralité de la couche d'adhésif 30. Autrement dit, le liquide 40 applique une pression sur l'intégralité de la surface sur laquelle s'étend la couche d'adhésif 30.

Dans un exemple de réalisation, le pouvoir adhésif de l'adhésif 30 peut augmenter par chauffage du fait de la réticulation de l'adhésif 30. Dans ce cas, le dispositif 1 peut comporter un organe de chauffage 60 constitué, par exemple, d'une pluralité de résistances chauffantes. L'organe de chauffage 60 peut, par exemple, être présent dans le support 5 comme illustré. Lorsqu'une étape de chauffage est réalisée, celle-ci peut être menée alors que les pièces 10 et 11 sont soumises à la pression appliquée par le liquide 40.

Dans des variantes non illustrées, l'organe de chauffage peut être présent dans la cavité et/ou dans la paroi et/ou sur la paroi et/ou dans la chambre. En variante encore, le dispositif ne comporte pas d'organe de chauffage et le chauffage de l'adhésif est effectué par un organe de chauffage extérieur au dispositif.

Dans une variante non illustrée, on peut réaliser le collage d'une pièce sur une aube directrice de sortie à l'aide d'une paroi ayant, avant application du liquide sur celle-ci, la même forme que la pièce à coller.

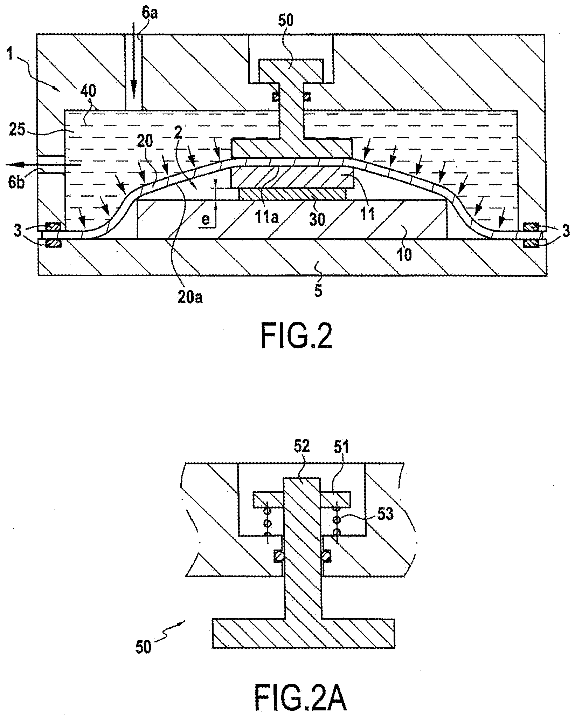

Dans les exemples de réalisation représentés aux figures 2, 3 et 4 détaillés ci-dessous, la face interne 20a de la paroi 20 est située en regard de l'ensemble des pièces à coller (i.e. pas seulement en regard de la première pièce).

On a représenté à la figure 2 une variante de réalisation d'un procédé de collage selon l'invention. Dans l'exemple de la figure 2, l'intégralité des pièces à coller 10 et 11 est présente dans la chambre 2. La chambre 2 est définie entre un support 5 sur lequel les pièces 10 et 11 sont présentes et la paroi 20. Le liquide 40 introduit dans la cavité 25 est présent sur la paroi 20 du côté opposé à la chambre 2 et impose une pression sur les pièces 10 et 11. Dans cet exemple de réalisation, la forme de la face interne 20a de la paroi 20 a été modifiée, après introduction du liquide 40 dans la cavité 25, de manière à prendre la même forme que la pièce 11. La face interne 20a de la paroi 20 a pris, après application du liquide 40, la même forme que la face 11a de la pièce 11 située en regard de la paroi 20.

Le dispositif 1 comporte un tirant 50 permettant de limiter le déplacement de la paroi 20. Le tirant 50 peut, par exemple, être rapporté sur la paroi 20. Le tirant 50 permet avantageusement de contrôler l'épaisseur e de la couche d'adhésif 30.

On a représenté à la figure 2A un détail de la figure 2. Comme illustré à la figure 2A, le tirant 50 comporte un chapeau 51 vissé sur une barre filetée 52. Un système 53 comportant, par exemple, un ressort ou des rondelles Belleville peut permettre de contrôler la descente et la remontée automatique du tirant 50. Le tirant 50 peut aussi être piloté par application d'une surpression par exemple par un vérin externe (non représenté). La mise en œuvre d'un tel vérin externe peut avantageusement permettre de coller des pièces à des pressions différentes.

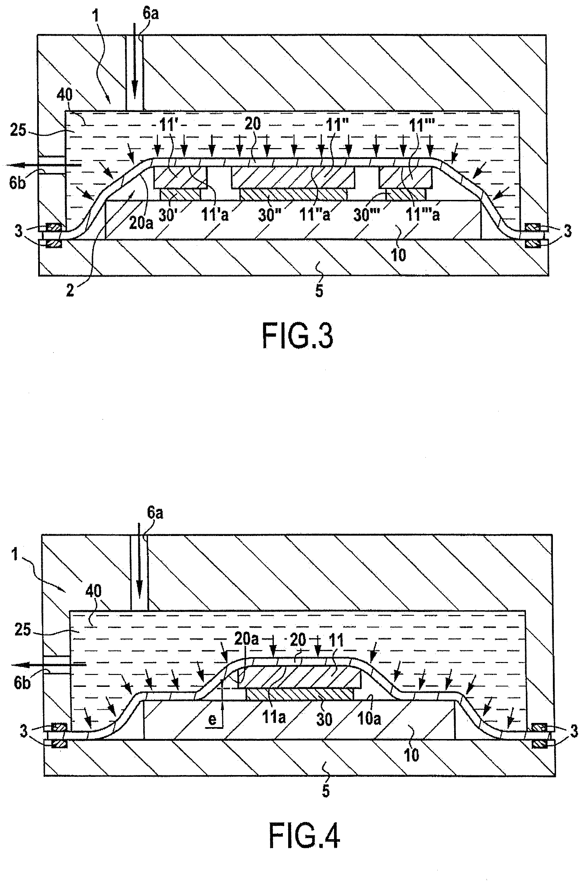

On a représenté à la figure 3 un autre exemple de réalisation dans lequel une des pièces à coller 10 est revêtue d'une pluralité de couches d'adhésif 30', 30" et 30'''. Comme illustré, les couches d'adhésif 30', 30" et 30''' ne sont pas en contact les unes avec les autres. Chaque couche d'adhésif 30', 30" et 30''' est présente entre deux pièces à coller. En effet :
- la pièce 11' est destinée à être collée à la pièce 10 par l'intermédiaire de la couche d'adhésif 30',
- la pièce 11" est destinée à être collée à la pièce 10 par l'intermédiaire de la couche d'adhésif 30", et
- la pièce 11''' est destinée à être collée à la pièce 10 par l'intermédiaire de la couche d'adhésif 30'''.

Comme représenté, la face interne 20a de la paroi 20 située en regard des pièces 11', 11" et 11''' a, après application du liquide 40, la même forme que les faces 11'a, 11"a et 11'''a des pièces 11', 11" et 11'''.

Les pièces à coller 11', 11" et 11''' peuvent être identiques ou différentes. Les couches d'adhésif 30', 30" et 30''' peuvent comporter un adhésif identique. En variante, les couches d'adhésif 30', 30" et 30''' peuvent comporter des adhésifs différents, comportant par exemple chacune un adhésif différent. Dans une variante non illustrée, la pièce 10 est remplacée par une pluralité de pièces, chacune étant destinée à être collée à une pièce distincte. Dans l'exemple de réalisation représenté à la figure 4, la paroi 20 est configurée pour que :
- sa face interne 20a ait, après application du liquide 40, la même forme que la face 11a de la première pièce 11 située en regard de la paroi 20, et pour que
- sa face interne 20a ait, après application du liquide 40, la même forme qu'une partie de la face 10a de la deuxième pièce 10 sur laquelle la première pièce 11 est destinée à être collée.

Dans cet exemple de réalisation, la paroi est suffisamment souple pour que la forme de sa face interne 20a soit modifiée après application du liquide 40 et prenne à la fois la forme de la première pièce 11 et de la deuxième pièce 10.

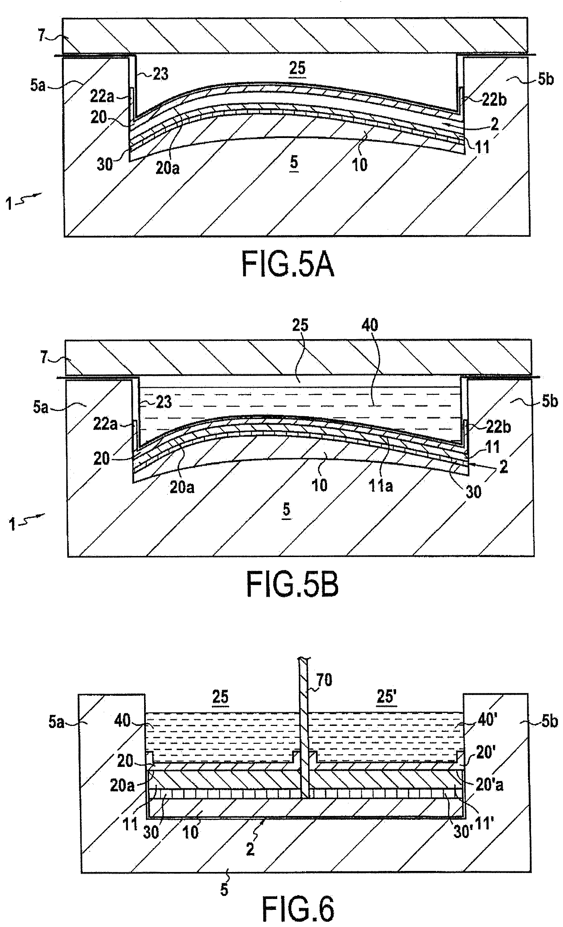

On a représenté aux figures 5A et 5B une variante de réalisation d'un procédé selon l'invention. Dans cet exemple de réalisation, la paroi 20 est apte à conserver sa forme lors de l'application du liquide 40.

Comme illustré, la chambre 2 dans laquelle les deux pièces à coller 10 et 11 sont présentes est délimitée par le support 5 et la paroi 20. La chambre 2 est, par ailleurs, délimitée par des parois latérales 5a et 5b du support 5.

La cavité 25 dans laquelle le liquide est destiné à être introduit est délimitée par les parois latérales 5a et 5b du support 5. Un couvercle 7 est présent afin de refermer la cavité 25.

La paroi 20 peut être mise en mouvement par rapport au support 5 lorsqu'une pression suffisante est exercée sur celle-ci. Dans l'exemple illustré, la paroi 20 présente deux extrémités 22a et 22b coopérant avec les parois latérales 5a et 5b. Ces extrémités 22a et 22b en coopération avec les parois latérales 5a et 5b assurent le guidage de la paroi 20 par rapport au support 5. Ces extrémités 22a et 22b peuvent, par exemple, constituer des bords remontants, comme illustré. On ne sort pas du cadre de la présente invention si les extrémités 22a et 22b se présentent sous une autre forme apte à coopérer avec les parois 5a et 5b afin de permettre un déplacement de la paroi 20 par rapport au support 5.

Comme illustré à la figure 5A, le dispositif 1 peut, en outre, comporter une membrane imperméable 23 recouvrant la paroi 20, et la paroi 20 peut être située entre la chambre 2 et la membrane imperméable 23, et le liquide 40 peut être appliqué sur la membrane imperméable 23 du côté opposé à la chambre 2.

On a représenté à la figure 5B le dispositif 1 de la figure 5A après introduction du liquide 40 dans la cavité 25. Comme illustré, l'application du liquide 40 ne modifie pas la forme de la paroi 20, celle-ci étant suffisamment rigide pour que sa forme ne soit pas affectée par l'application du liquide 40. En particulier, la face interne 20a de la paroi 20 conserve sa forme lors de l'application du liquide 40.

Ainsi, l'application du liquide 40 provoque un déplacement de la paroi 20 vers le support 5 sans modification de la forme de la paroi 20. Comme illustré, les extrémités 22a et 22b de la paroi 20 se rapprochent du support 5 suite à l'application du liquide 40. La paroi 20 présente la même forme durant le procédé de collage. En particulier, la forme de la face interne 20a de la paroi 20 correspond à la forme de la première pièce 11. Comme illustré, la face interne 20a de la paroi 20 a la même forme que la face 11a de la première pièce 11 située en regard de la paroi 20.

La paroi 20 maintient une pression isostatique sur les pièces 10 et 11 du fait de la présence du liquide 40 s'appuyant sur la paroi 20.

Une fois le liquide 40 appliqué sur la paroi 20, on peut réaliser une étape de chauffage visant à augmenter le pouvoir adhésif de l'adhésif 30 du fait d'une polymérisation de celui-ci. Lorsqu'une telle étape de chauffage est réalisée, le liquide 40 peut ne pas être affecté par celle-ci. En d'autres termes, le liquide 40 peut ne pas changer d'état durant l'étape c).

On a représenté à la figure 6 un autre exemple de réalisation de procédé selon l'invention. Afin d'obtenir l'arrangement représenté à la figure 6, une pièce 10 a tout d'abord été placée sur un support 5. Deux couches d'adhésif 30 et 30' ont ensuite été appliquées sur la pièce 10. Deux pièces à coller 11 et 11' ont ensuite été placées sur les couches d'adhésif 30 et 30' respectivement. Une cloison 70 a ensuite été positionnée. Deux parois 20 et 20' ont ensuite été positionnées, les parois 20 et 20' coopérant avec la cloison 70 et les parois latérales 5a et 5b. Des liquides 40 et 40' ont alors été introduits dans chacune des cavités 25 et 25'.

Les liquides 40 et 40' permettent de réaliser un collage des pièces 11 et 11' à la pièce 10 par l'intermédiaire de deux parois distinctes 20 et 20'. On peut réaliser dans le cadre des procédés selon l'invention un collage de pièces par l'intermédiaire de liquides appliqués dans deux cavités différentes 25 et 25'.

### Exemple

On donne ci-dessous un protocole opératoire pour réaliser le collage d'un bord d'attaque en titane sur une aube en matériau composite comportant un renfort de fibres de carbone densifié par une résine époxyde PR520 au sein d'un outillage en acier.

Un assemblage du bord d'attaque, du film de colle époxyde et de l'aube est tout d'abord réalisé.

L'assemblage ainsi obtenu est présent dans une chambre délimitée par une membrane en silicone de forme.

L'ensemble est chauffé à 160°C et de l'huile est ensuite appliquée sur la membrane. L'huile appliquée permet d'exercer une pression de 3 bars et permet à la membrane de prendre appui sur le bord d'attaque.

L'ensemble ainsi mis sous pression est soumis à une température de 180°C pendant 2 heures afin d'obtenir un collage du bord d'attaque à l'aube.

L'expression « comportant/contenant un(e) » doit se comprendre comme « comportant/contenant au moins un(e) ».

L'expression « compris(e) entre ... et ... » ou « allant de ... à ... » doit se comprendre comme incluant les bornes.

## Revendications

1. Procédé de collage d'au moins deux pièces (10 ; 11 ; 11' ; 11" ; 11''') comportant les étapes suivantes :
a) assemblage d'au moins deux pièces (10; 11; 11'; 11"; 11''') et d'au moins une couche d'adhésif (30 ; 30' ; 30" ; 30'''), l'adhésif étant configuré pour que son pouvoir adhésif augmente par chauffage du fait de sa polymérisation, l'une au moins des pièces étant en matériau composite ou en matériau métallique, la couche d'adhésif (30 ; 30' ; 30" ; 30''') étant présente, une fois l'assemblage effectué, entre les pièces (10 ; 11 ; 11'; 11"; 11'''), les pièces (10 ; 11 ; 11'; 11"; 11''') et l'adhésif assemblés étant présents dans une chambre (2) délimitée par une paroi (20 ; 20'), la paroi (20 ; 20') ayant une face interne (20a; 20'a) située en regard d'une première pièce (11 ; 11' ; 11" ; 11''') présente entre la couche d'adhésif (30 ; 30' ; 30" ; 30''') et la paroi (20 ; 20'), la première pièce (11 ; 11' ; 11" ; 11''') étant destinée à être collée sur une deuxième pièce (10) et seule une partie de la deuxième pièce (10) étant présente dans la chambre (2), et
b) application d'un liquide (40 ; 40') sur la paroi (20 ; 20') du côté opposé à la chambre (2), le liquide restant immobile une fois appliqué afin d'imposer une pression hydrostatique sur les pièces (10 ; 11 ; 11' ; 11" ; 11'''), la paroi (20 ; 20') étant configurée pour que, au moins après application du liquide (40 ; 40'), sa face interne (20a ; 20'a) ait la même forme que la première pièce (11 ; 11'; 11"; 11'''), un collage des pièces (10 ; 11 ; 11' ; 11" ; 11''') par l'intermédiaire de la couche d'adhésif (30 ; 30' ; 30" ; 30''') étant obtenu après mise en œuvre des étapes a) et b).

2. Procédé selon la revendication 1, **caractérisé en ce que** la face interne (20a ; 20'a) de la paroi (20 ; 20') conserve sa forme lors de l'application du liquide (40 ; 40').

3. Procédé selon la revendication 1, **caractérisé en ce que** la forme de la face interne (20a ; 20'a) de la paroi (20 ; 20') est modifiée lors de l'application du liquide (40 ; 40').

4. Procédé selon l'une quelconque des revendications 1 à 3, **caractérisé en ce qu'**il comporte, après l'étape b), une étape c) de chauffage de la couche d'adhésif (30 ; 30' ; 30" ; 30''').

5. Procédé selon la revendication 4, **caractérisé en ce que** un organe de chauffage (60) réalisant le chauffage durant tout ou partie de l'étape c) est présent dans une cavité (25 ; 25') dans laquelle le liquide (40 ; 40') est introduit lors de l'étape b) et/ou dans un support (5) délimitant la cavité (25 ; 25') et/ou dans la paroi (20 ; 20') et/ou sur la paroi (20 ; 20') et/ou dans la chambre (2).

6. Procédé selon l'une quelconque des revendications 1 à 5, **caractérisé en ce que** la chambre (2) est définie entre la paroi (20 ; 20') et un support (5) délimitant une cavité (25 ; 25') dans laquelle le liquide (40 ; 40') est introduit lors de l'étape b), les pièces (10; 11 ; 11'; 11" ; 11''') étant présentes avant l'étape b) sur le support (5).

7. Procédé selon l'une quelconque des revendications 1 à 6, **caractérisé en ce que** une pluralité de couches d'adhésif (30' ; 30" ; 30''') est présente sur au moins une des pièces, les couches d'adhésif (30' ; 30" ; 30''') n'étant pas en contact les unes avec les autres et chaque couche d'adhésif (30' ; 30" ; 30''') étant présente entre deux pièces à coller.

8. Procédé selon l'une quelconque des revendications 1 à 7, **caractérisé en ce que** la paroi (20) se déplace durant l'étape b) et **en ce que** le déplacement de tout ou partie de la paroi (20) est contrôlé, durant l'étape b), par un organe (50) de limitation du déplacement de la paroi (20).

9. Procédé selon l'une quelconque des revendications 1 à 8, **caractérisé en ce que** les pièces sont en matériau composite et comportent un renfort fibreux ainsi qu'une matrice.

10. Procédé selon l'une quelconque des revendications 1 à 8, **caractérisé en ce que** la première pièce (11) est en matériau métallique et une deuxième pièce (10) sur laquelle la première pièce (11) est destinée à être collée est en matériau composite et comporte un renfort fibreux ainsi qu'une matrice.

11. Procédé selon l'une quelconque des revendications 1 à 8, **caractérisé en ce que** les pièces sont en matériau métallique.

12. Procédé selon l'une quelconque des revendications 1 à 11, **caractérisé en ce que** la première pièce est un élément (11) destiné à constituer une fois collé un bord d'attaque ou un bord de fuite et une deuxième pièce sur laquelle la première pièce (11) est destinée à être collée est une aube de turbomachine (10).

13. Dispositif pour la mise en œuvre d'un procédé selon l'une quelconque des revendications 1 à 12, le dispositif comportant :
- une paroi (20 ; 20') délimitant une chambre (2), la chambre (2) définissant un volume interne dans lequel au moins deux pièces (10 ; 11 ; 11' ; 11" ; 11''') sont destinées à être collées par l'intermédiaire d'au moins une couche d'adhésif (30 ; 30' ; 30" ; 30'''), et
- un dispositif d'injection de liquide configuré pour appliquer un liquide (40 ; 40') sur la paroi (20 ; 20'),
le dispositif étant configuré pour que l'application du liquide (40 ; 40') sur la paroi (20 ; 20') ne modifie pas la forme de la face interne (20a ; 20'a) de la paroi (20 ; 20') située du côté de la chambre (2) et génère une pression suffisante sur la paroi (20 ; 20') pour déplacer celle-ci et réduire le volume interne de la chambre (2).

14. Dispositif selon la revendication 13, **caractérisé en ce que** le dispositif comporte, en outre, un organe de chauffage (60), l'organe de chauffage (60) étant présent dans une cavité (25 ; 25') dans laquelle le liquide (40 ; 40') est destiné à être introduit et/ou dans un support (5) délimitant la cavité (25 ; 25') et/ou dans la paroi (20 ; 20') et/ou sur la paroi (20 ; 20') et/ou dans la chambre (2).

15. Dispositif selon la revendication 14, **caractérisé en ce que** l'organe de chauffage (60) est présent dans la cavité (25 ; 25') dans laquelle le liquide (40 ; 40') est destiné à être introduit.

## Patentansprüche

1. Verfahren zum Verkleben von wenigstens zwei Teilen (10; 11; 11'; 11"; 11'''), das die folgenden Schritte umfasst:
a) Verbinden von wenigstens zwei Teilen (10; 11; 11'; 11"; 11''') und wenigstens einer Klebstoffschicht (30; 30'; 30"; 30'''), wobei der Klebstoff so ausgelegt ist, dass seine Haftkraft durch Erhitzen aufgrund seiner Polymerisation zunimmt, wobei wenigstens eines der Teile aus Verbundwerkstoff oder aus metallischem Material besteht, wobei die Klebstoffschicht (30; 30'; 30"; 30'''), sobald das Verbinden vollzogen ist, zwischen den Teilen (10; 11; 11'; 11"; 11''') vorhanden ist, wobei die Teile (10 ; 11; 11' ; 11" ; 11''') und der Klebstoff, die verbunden sind, in einer durch eine Wand (20 ; 20') begrenzten Kammer (2) vorhanden sind, wobei die Wand (20; 20') eine Innenseite (20a; 20'a) aufweist, welche gegenüber einem ersten Teil (11; 11'; 11"; 11''') gelegen ist, das zwischen der Klebstoffschicht (30; 30'; 30"; 30''') und der Wand (20, 20') vorhanden ist, wobei das erste Teil (11; 11'; 11"; 11''') dazu bestimmt ist, auf ein zweites Teil (10) geklebt zu werden, und lediglich ein Teil des zweiten Teils (10) in der Kammer (2) vorhanden ist, und
b) Aufbringen einer Flüssigkeit (40; 40') auf die Wand (20; 20') auf der der Kammer (2) gegenüberliegenden Seite, wobei die Flüssigkeit, sobald sie aufgebracht ist, unbeweglich bleibt, um die Teile (10; 11; 11'; 11"; 11''') mit einem hydrostatischen Druck zu beaufschlagen, wobei die Wand (20; 20') so ausgebildet ist, dass wenigstens nach dem Aufbringen der Flüssigkeit (40; 40') ihre Innenseite (20a; 20'a) die gleiche Form wie das erste Teil (11; 11'; 11"; 11''') aufweist, wobei ein Verkleben der Teile (10; 11; 11'; 11"; 11''') mittels der Klebstoffschicht (30; 30'; 30"; 30''') nach dem Durchführen der Schritte a) und b) erhalten wird.

2. Verfahren nach Anspruch 1, **dadurch gekennzeichnet, dass** die Innenseite (20a; 20'a) der Wand (20; 20') ihre Form während des Aufbringens der Flüssigkeit (40; 40') beibehält.

3. Verfahren nach Anspruch 1, **dadurch gekennzeichnet, dass** die Form der Innenseite (20a; 20'a) der Wand (20; 20') während des Aufbringens der Flüssigkeit (40; 40') verändert wird.

4. Verfahren nach einem der Ansprüche 1 bis 3, **dadurch gekennzeichnet, dass** es nach Schritt b) einen Schritt c) des Erhitzens der Klebstoffschicht (30; 30'; 30"; 30''') umfasst.

5. Verfahren nach Anspruch 4, **dadurch gekennzeichnet, dass** ein Heizorgan (60), welches das Erhitzen während des gesamten Schrittes c) oder eines Teils davon durchführt, in einem Hohlraum (25; 25'), in den die Flüssigkeit (40; 40') während des Schrittes b) eingeleitet wird, und/oder in einem den Hohlraum (25; 25') begrenzenden Träger (5) und/oder in der Wand (20; 20') und/oder an der Wand (20; 20') und/oder in der Kammer (2) vorhanden ist.

6. Verfahren nach einem der Ansprüche 1 bis 5, **dadurch gekennzeichnet, dass** die Kammer (2) zwischen der Wand (20; 20') und einem Träger (5) definiert ist, der einen Hohlraum (25; 25') begrenzt, in den die Flüssigkeit (40; 40') während des Schrittes b) eingeleitet wird, wobei die Teile (10; 11; 11'; 11"; 11''') vor Schritt b) auf dem Träger (5) vorhanden sind.

7. Verfahren nach einem der Ansprüche 1 bis 6, **dadurch gekennzeichnet, dass** eine Vielzahl von Klebstoffschichten (30'; 30"; 30''') auf wenigstens einem der Teile vorhanden ist, wobei die Klebstoffschichten (30'; 30"; 30''') nicht miteinander in Kontakt stehen, und wobei jede Klebstoffschicht (30'; 30"; 30''') zwischen zwei zu verklebenden Teilen vorhanden ist.

8. Verfahren nach einem der Ansprüche 1 bis 7, **dadurch gekennzeichnet, dass** sich die Wand (20) während des Schrittes b) bewegt und dass die Bewegung der gesamten Wand (20) oder eines Teils davon während des Schrittes b) durch ein Organ (50) zum Begrenzen der Bewegung der Wand (20) gesteuert wird.

9. Verfahren nach einem der Ansprüche 1 bis 8, **dadurch gekennzeichnet, dass** die Teile aus Verbundwerkstoff bestehen und eine Faserverstärkung sowie eine Matrix umfassen.

10. Verfahren nach einem der Ansprüche 1 bis 8, **dadurch gekennzeichnet, dass** das erste Teil (11) aus metallischem Material besteht und ein zweites Teil (10), auf das das erste Teil (11) geklebt werden soll, aus Verbundwerkstoff besteht und eine Faserverstärkung sowie eine Matrix umfasst.

11. Verfahren nach einem der Ansprüche 1 bis 8, **dadurch gekennzeichnet, dass** die Teile aus metallischem Material bestehen.

12. Verfahren nach einem der Ansprüche 1 bis 11, **dadurch gekennzeichnet, dass** das erste Teil ein Element (11) ist, welches - sobald es geklebt ist - dazu bestimmt ist, eine Vorderkante oder eine Hinterkante zu bilden, und ein zweites Teil, auf das das erste Teil (11) geklebt werden soll, eine Turbomaschinenschaufel (10) ist.

13. Vorrichtung zum Durchführen eines Verfahrens nach einem der Ansprüche 1 bis 12, wobei die Vorrichtung umfasst:
- eine Wand (20; 20'), die eine Kammer (2) begrenzt, wobei die Kammer (2) ein Innenvolumen definiert, in dem wenigstens zwei Teile (10; 11; 11'; 11"; 11''') mittels wenigstens einer Klebstoffschicht (30; 30'; 30"; 30''') verklebt werden sollen, und
- eine Flüssigkeitseinspritzvorrichtung, die dazu ausgelegt ist, eine Flüssigkeit (40; 40') auf die Wand (20; 20') aufzubringen,
wobei die Vorrichtung so ausgelegt ist, dass das Aufbringen der Flüssigkeit (40; 40') auf die Wand (20; 20') nicht die Form der Innenseite (20a; 20'a) der Wand (20; 20'), welche auf der Seite der Kammer (2) gelegen ist, verändert, und einen ausreichenden Druck auf die Wand (20; 20') erzeugt, um diese zu bewegen und das Innenvolumen der Kammer (2) zu verringern.

14. Vorrichtung nach Anspruch 13, **dadurch gekennzeichnet, dass** die Vorrichtung ferner ein Heizorgan (60) umfasst, wobei das Heizorgan (60) in einem Hohlraum (25; 25'), in den die Flüssigkeit (40; 40') eingeleitet werden soll, und/oder in einem den Hohlraum (25; 25') begrenzenden Träger (5) und/oder in der Wand (20; 20') und/oder an der Wand (20; 20') und/oder in der Kammer (2) vorhanden ist.

15. Vorrichtung nach Anspruch 14, **dadurch gekennzeichnet, dass** das Heizorgan (60) in dem Hohlraum (25; 25') vorhanden ist, in den die Flüssigkeit (40; 40') eingeleitet werden soll.

## Claims

1. A method of bonding together at least two parts (10; 11; 11'; 11"; 11'''), the method comprising the following steps:
a) assembling together at least two parts (10; 11; 11'; 11"; 11"') and at least one adhesive layer (30; 30'; 30"; 30"'), the adhesive being configured so that its adhesive power increases on heating as a result of it polymerizing, at least one of the parts being made of composite material or of metal, the adhesive layer (30; 30'; 30"; 30"') being present, after assembly, between the parts (10; 11; 11'; 11"; 11'''), the assembled together parts (10; 11; 11'; 11"; 11"') and the adhesive being present in a chamber (2) defined by a wall (20; 20'), the wall (20; 20') having an inside face (20a; 20'a) situated facing a first part (11; 11'; 11"; 11"') present between the adhesive layer (30; 30'; 30"; 30"') and the wall (20; 20'); the first part (11; 11'; 11"; 11"') being intended to be bonded to a second part (10) and only part of the second part (10) being present in the chamber (2) ; and
b) applying a liquid (40; 40') against the wall (20; 20') on its side opposite from the chamber (2), the liquid remaining stationary once applied to apply a hydrostatic pressure on the parts (10; 11; 11'; 11"; 11"') the wall (20; 20') being configured so that, at least after application of the liquid (40; 40'), its inside face (20a; 20'a) has the same shape as the first part (11; 11'; 11"; 11'''), the parts (10; 11; 11'; 11"; 11"') being bonded together by means of the adhesive layer (30; 30'; 30"; 30"') as a result of performing steps a) and b).

2. A method according to claim 1, **characterized in that** the inside face (20a; 20'a) of the wall (20; 20') conserves its shape during application of the liquid (40; 40').

3. A method according to claim 1, **characterized in that** the shape of the inside face (20a; 20'a) of the wall (20; 20') is modified during application of the liquid (40; 40').

4. A method according to any one of claims 1 to 3, **characterized in that**, after step b), it includes a step c) of heating the adhesive layer (30; 30'; 30"; 30"').

5. A method according to claim 4, **characterized in that** a heater member (60) performing heating throughout part or all of step c) is present in a cavity (25; 25') into which the liquid (40; 40') is inserted during step b) and/or in a support (5) defining the cavity (25; 25') and/or in the wall (20; 20') and/or on the wall (20; 20') and/or in the chamber (2).

6. A method according to any one of claims 1 to 5, **characterized in that** the chamber (2) is defined between the wall (20; 20') and a support (5) defining a cavity (25; 25') into which the liquid (40; 40') is inserted during step b), the parts (10; 11; 11'; 11"; 11"') being present on the support (5) before step b).

7. A method according to any one of claims 1 to 6, **characterized in that** a plurality of adhesive layers (30'; 30"; 30"') are present on at least one of the parts, the adhesive layers (30'; 30"; 30"') not being in contact with one another and each adhesive layer (30'; 30", 30"') being present between two parts for bonding together.

8. A method according to any one of claims 1 to 7, **characterized in that** the wall (20) moves during step b) and **in that** the movement of all or part of the wall (20) is controlled during step b) by a member (50) for limiting the movement of the wall (20).

9. A method according to any one of claims 1 to 8, **characterized in that** the parts are made of composite material and comprise fiber reinforcement together with a matrix.

10. A method according to any one of claims 1 to 8, **characterized in that** the first part (11) is made of metal and a second part (10) to which the first part (11) is to be bonded is made of composite material and comprises fiber reinforcement together with a matrix.

11. A method according to any one of claims 1 to 8, **characterized in that** the parts are made of metal.

12. A method according to any one of claims 1 to 11, **characterized in that** the first part is an element (11) for constituting, once bonded, a leading edge or a trailing edge, and a second part onto which the first part (11) is to be bonded is a turbine engine blade (10).

13. A device for performing a method according to any one of claims 1 to 12, the device comprising:
- a wall (20; 20') defining a chamber (2), the chamber (2) defining an inside volume in which at least two parts (10; 11; 11'; 11"; 11"') are to be bonded together by means of at least one adhesive layer (30; 30'; 30"; 30"'); and
- a liquid injection device configured to apply a liquid (40; 40') against the wall (20; 20');
the device being configured so that applying the liquid (40; 40') against the wall (20; 20') does not modify the shape of the inside face (20a; 20'a) of the wall (20; 20') situated beside the chamber (2) and generates sufficient pressure on the wall (20; 20') to move the wall and reduce the inside volume of the chamber (2) .

14. A device according to claim 13, **characterized in that** the device further includes a heater member (60), the heater member (60) being present in a cavity (25; 25') in which the liquid (40; 40') is to be inserted and/or in a support (5) defining the cavity (25; 25') and/or in the wall (20; 20') and/or on the wall (20; 20') and/or in the chamber (2).

15. A device according to claim 14, **characterized in that** the heater member (60) is present in the cavity (25; 25') in which the liquid (40; 40') is to be inserted.
